# EUROPÄISCHE PATENTSCHRIFT

(11) **EP 2 720 930 B1**
(45) Veröffentlichungstag und Bekanntmachung des Hinweises auf die Patenterteilung: **28.06.2017**
(21) Anmeldenummer: 12718252.5
(22) Anmeldetag: 04.05.2012
(51) Int. Cl.: B60G 3/20, B60G 7/00, B62D 7/14

(54) **EINZELRADAUFHÄNGUNG EINES ZUMINDEST GERINGFÜGIG LENKBAREN HINTERRADS EINES ZWEISPURIGEN FAHRZEUGS**
INDEPENDENT WHEEL SUSPENSION OF AN AT LEAST SLIGHTLY STEERABLE REAR WHEEL OF A TWO-TRACK VEHICLE
SUSPENSION DE ROUE INDÉPENDANTE D'UNE ROUE ARRIÈRE AU MOINS LÉGÈREMENT ORIENTABLE D'UN VÉHICULE À DEUX VOIES

(30) Priorität: 17.06.2011 DE 102011077750
(43) Veröffentlichungstag der Anmeldung: 23.04.2014
(73) Patentinhaber: Bayerische Motoren Werke Aktiengesellschaft, 80809 München (DE)
(72) Erfinder: GLANZER, Michael, 80336 Muenchen (DE); SCHOLZ, Hubert, 81543 München (DE); SEETHALER, Ludwig, 85241 Hebertshausen (DE)
(86) Internationale Anmeldenummer: PCT/EP2012/058249
(87) Internationale Veröffentlichungsnummer: WO 2012/171717

(56) Entgegenhaltungen:
- EP-A1- 0 323 414
- EP-A1- 0 323 815
- DE-A- 3 926 665
- DE-A1- 3 939 312
- DE-A1-102006 055 295
- JP-A- 62 110 506
- US-A- 5 102 159

## Beschreibung

Die Erfindung betrifft eine Einzelradaufhängung eines mittels eines Aktuators zumindest geringfügig lenkbaren Hinterrads eines zweispurigen Fahrzeugs, dessen das Rad tragendes Schwenklager durch einen sich im wesentlichen in Fahrzeug-Längsrichtung erstreckenden Längslenker sowie zwei sich mit Pfeilung nach vorne innen überwiegend in Fahrzeug-Querrichtung erstreckende und bei Betrachtung in Fahrzeug-Längsrichtung in verschiedenen Ebenen liegende Querlenker geführt ist, deren dem Schwenklager abgewandte Enden zumindest geringfügig gelenkig direkt oder indirekt mit dem Fahrzeug-Aufbau verbunden sind. Zum Stand der Technik wird neben der DE 41 29 643 C2 insbesondere auf die DE 38 27 039 A1 verwiesen. Das Dokument DE 38 27 039 A1 wird als nächstliegender Stand der Technik betrachtet. In der erstgenannten Schrift ist ein Beispiel einer in der Fachwelt auch sog. Zentrallenkerachse beschrieben, die sich insbesondere bei angetriebenen Rädern durch ein günstiges kinematisches Verhalten auszeichnet und dabei vorteilhafter ist als die weiterhin bekannten sog. Schräglenkerachsen. In der zweitgenannten Schrift ist eine Möglichkeit aufgezeigt, wie ein solchermaßen geführtes Rad geringfügig gelenkt werden kann. Dabei ist der Spurwinkel dieses Rades mittels eines am fahrzeugaufbauseitigen Lager des Längslenkers geeignet angreifenden Aktuators einstellbar. Diese bekannte Anordnung benötigt nicht nur im Bereich des fahrzeugaufbauseitigen Längslenker-Lagers sondern auch in der näheren Umgebung des Längslenkers für dessen horizontale Verschwenkbarkeit (in Fahrzeug-Querrichtung) zusätzlichen Bauraum, welcher abhängig von der Gestaltung des Fahrzeug-Aufbaus in diesem Bereich möglicherweise nicht verfügbar ist. Ferner ist von Nachteil, dass an einem zweispurigen Fahrzeug zwei Aktuatoren zum Lenken der beiden Hinterräder benötigt werden, was nicht nur aufwändig, sondern auch steuerungstechnisch schwer darzustellen ist. Die Dokumente DE 39 26 665 A1 und DE 39 39 312 A1 beschreiben andere Einzelradaufhängungen.

Vorliegend soll eine diesbezüglich verbesserte Einzelradaufhängung bzw. Fahrzeug-Achse mit den im Oberbegriff des Anspruchs 1 aufgeführten Merkmalen unter Beibehaltung von deren vorteilhaften grundsätzlichen kinematischen und elastokinematischen Eigenschaften sowie wesentlichen Abmessungen aufgezeigt werden (= Aufgabe der vorliegenden Erfindung). Die Lösung dieser Aufgabe ist dadurch gekennzeichnet, dass das Schwenklager über zwei bei Betrachtung in Fahrzeug-Längsrichtung in unterschiedlicher Höhe liegende Lager oder Gelenke derart gelenkig mit dem Längslenker verbunden ist, dass diese Lager oder Gelenke eine in Seitenansicht überwiegend senkrecht verlaufende Lenkdrehachse mit negativem Lenkrollradius für das Rad beschreiben, und dass jeder Querlenker über ein Gummilager oder ein zumindest einen geringen Drehfreiheitsgrad aufweisendes Gelenk am Längslenker befestigt ist, und wobei das Schwenklager unter Abstützung an einem weichen Gummilager weiterhin durch eine Spurstange geführt ist, die mit einem im wesentlichen in Fahrzeug-Querrichtung verlagerbaren Stellelement des im wesentlichen zentral angeordneten und für beide Hinterräder des Fahrzeugs wirksamen Aktuators verbunden ist. Vorteilhafte Weiterbildungen sind Inhalt der Unteransprüche. Erfindungsgemäß ist abweichend von der eingangs genannten DE 38 27 039 A1 eine von den radseitigen Gelenken der Querlenker unabhängige Lenkdrehachse gebildet und es wird dieser so geschaffene zusätzliche Freiheitsgrad durch eine Spurstange gebunden, die am Radträger angreift, der nun als Schwenklager bezeichnet wird aber funktional nichts anderes als ein um diese gebildete Lenkdrehachse gegenüber dem Längslenker verschwenkbarer Radträger ist. Die nun hinzugefügte Spurstange des ersten Hinterrads des Fahrzeugs ist mit einem Stellelement eines im weiteren auch sog. Lenk-Aktuators verbunden und ebenso ist das andere zweite Hinterrad des Fahrzeugs über dessen Spurstange ebenso mit einem Stellelement desselben (Lenk)-Aktuators verbunden. Bei diesem Stellelement oder ggf. zwei Stellelementen des erfindungsgemäß einzigen und für beide Hinterräder vorgesehenen im wesentlichen zentral angeordneten Aktuators kann es sich beispielsweise um eine in Fahrzeug-Querrichtung verlagerbare Stange, ähnlich einer Zahnstange bei der Vorderrad-Lenkung eines PKW's, handeln. Der Aktuator kann nahe bei der inneren Anlenkung der beiden Querlenker am Fahrzeug-Aufbau oder einem Achsträger oder dergleichen angeordnet werden und beansprucht daher wenig zusätzlichen Bauraum.

Wie bereits erwähnt besitzt das Schwenklager gegenüber dem Längslenker einen Drehfreiheitsgrad im wesentlichen um die Hochachse. Dieser Drehfreiheitsgrad kann durch ein Scharniergelenk oder durch zwei Kugelgelenke oder durch gleichwertige Lagerungen oder Gelenke dargestellt werden. Eine Stellbewegung des Aktuators führt über die Spurstange zum Verdrehen des Schwenklagers um die Lenkdrehachse und damit zu einem Lenkwinkel des am Schwenklager seinerseits um seine Drehachse drehbar gelagerten Rades. Für die Darstellung der besagten Lenkdrehachse kann beispielsweise die Verschraubung der beiden äußeren Querlenker-Lager mit genutzt werden, um beispielsweise zwei Kugelgelenke, welche diese Lenkdrehachse definieren, am Längslenker zu befestigen, so wie dies grundsätzlich in der nicht vorveröffentlichten deutschen Patentanmeldung mit dem amtlichen Aktenzeichen 102011007283.7 gezeigt ist. Vorteilhafterweise sitzen diese genannten beiden Kugelgelenke oder andere zur Darstellung der Lenkdrehachse vorgesehene Gelenke in Fahrtrichtung des Fahrzeugs betrachtet vor den beiden äußeren Querlenker-Lagern, um die Lenkdrehachse möglichst nahe der Radmitte darzustellen, womit sich eine betragsmäßig kleine Nachlaufstrecke ergibt. Damit wird ein geringer Querversatz des Radaufstandspunkts während der Lenkbewegung gewährleistet.

Bekanntlich zeichnet sich eine Zentrallenkerachse unter auf das Rad einwirkenden Bremskräften bei geeigneter Auslegung des fahrzeugaufbauseitigen Längslenker-Lagers durch ein stabilisierendes Verhalten aus. Indem nämlich wie in der EP 0 052 153 B1 beschrieben das fahrzeugaufbauseitige Längslenker-Lager in einer ersten sich mit einem größeren Anteil in Fzg.-Längsrichtung erstrecken Richtung (üblicherweise ist dies die Radialrichtung des Lagers) eine höhere Steifigkeit besitzt als in der hierzu senkrechten, sich mit einem größeren Anteil in Fahrzeug-Querrichtung ersteckenden (üblicherweise Axial-) Richtung des Lagers, ergibt sich unter Bremskraft-Einfluss eine Verschiebungsrichtung des fahrzeugaufbauseitigen Längslenker-Lagerpunktes im wesentlichen senkrecht zu den beiden Querlenkern geringfügig zu diesen hin, wodurch das Rad geringfügig in Vorspur geht. Dem kommt die auch unter Bauraum-Gründen gewählte Pfeilung der beiden Querlenker nach vorne innen entgegen.

Damit nun die Spurstange diesem stabilisierendem Verhalten einer Zentrallenkerachse nicht im Wege steht, wäre es wünschenswert, diese Spurstange in Draufsicht möglichst parallel zu den beiden Querlenkern anzuordnen, jedoch ist dies auch aus Bauraum-Gründen zumeist nicht darstellbar. Um dennoch ein vorteilhaftes stabilisierendes Verhalten einer solchen lenkbaren Zentrallenkerachse mit einer Spurstange darstellen zu können, ist zum ersten ein relativ weiches Gummilager in der Wirkkette der Spurstange, d.h. zwischen dem Schwenklager und der Spurstange und/oder zwischen der Spurstange und dem Stellelement des Aktuators vorgesehen, wobei als relative weiche Gummilager solche bezeichnet werden, deren Steifigkeit kleiner als 5000 N/mm beträgt. Darüber hinaus ist durch Darstellung eines negativen Lenkrollradius an einer erfindungsgemäßen Einzelradaufhängung sichergestellt, dass weiterhin das Rad unter Bremskraft-Einfluss in Vorspur geht. Dieser negative Lenkrollradius ist dabei durch geeignete Anordnung der die Lenkdrehachse bestimmenden Gelenke oder dgl. darstellbar.

Schließlich kann fakultativ die Spurstange zumindest geringfügig nach vorne innen gepfeilt angeordnet sein, wenngleich der Betrag der Pfeilung, d.h. der Pfeilungswinkel gegenüber der Fzg.-Querrichtung üblicherweise geringer sein wird als bei den beiden Querlenkern. Weiterhin wurde erkannt, dass eine günstige Vorspurkurve (= Verlauf der Vorspur über dem Radhub) darstellbar ist, wenn die Spurstange vom Stellelement des Aktuators zum Schwenklager hin geringfügig ansteigt, d.h. wenn das Gelenk zwischen der Spurstange und dem Aktuator-Stellelement in einer etwas geringeren Höhe über der Fahrbahn liegt als das gegenüberliegende Gelenk der Spurstange, über das diese vorzugsweise unter Zwischenschaltung eines sog. Spurhebels, der ein Bestandteil des Schwenklagers ist bzw. starr mit diesem verbunden ist, mit dem Schwenklager verbunden ist.

Wie bereits erwähnt wurde besitzt an typischen Zentrallenkerachsen das fahrzeugaufbauseitige Längslenker-Lager in einer ersten sich mit einem größeren Anteil in Fzg.-Längsrichtung erstreckenden Richtung (= üblicherweise die Radialrichtung des Lagers) eine höhere Steifigkeit als in der hierzu senkrechten sich mit einem größeren Anteil in Fahrzeug-Querrichtung erstreckenden Richtung (= üblicherweise die Axialrichtung des Lagers). Bei üblichen nicht lenkbaren Zentrallenkerachsen kann das Verhältnis dieser Steifigkeiten in der Größenordnung von 7:1 liegen. Bei einer erfindungsgemäßen lenkbaren Zentrallenkerachse wird eine solche Weichheit des besagten Längslenker-Lagers in Fahrzeug-Querrichtung nun nicht mehr benötigt, da das gewünschte "In-Vorspur-gehen" des Rades unter Bremskrafteinfluss nun durch den negativen Lenkrollradius dargestellt wird. Dies unterstützend und vorteilhafterweise eine gesteigerte Seitenführung darstellend kann nun das fahrzeugaufbauseitige Längslenker-Lager solchermaßen ausgeführt sein, dass dessen Steifigkeit in der ersten Richtung (Radialrichtung des Lagers) nicht mehr als dreifach so groß wie die Steifigkeit in der zweiten sich mit einem größeren Anteil in Fzg.-Querrichtung erstreckenden Richtung (= Axialrichtung des Lagers) ist.

Weiterhin wurde erkannt, dass sich über den Abstand des außenliegenden, d.h. dem Rad zugewandten Spurstangen-Gelenkpunktes von der bekanntlich durch das fahrzeugaufbauseitige Längslenker-Lager sowie den Pol der beiden Querlenker bestimmten Momentanachse einer erfindungsgemäßen Einzelradaufhängung auch die Vorspurkurve (= Verlauf der Vorspur über dem Radhub) in einer gewünschten Weise beeinflussen lässt. Dabei gilt, dass die Abweichung von der Vorspurkurve einer ähnlichen, jedoch nicht lenkbaren Einzelradaufhängung um so größer ist, je weiter sich die Momentanachse bei Einfeder- und Ausfeder-Bewegungen des Rades gegenüber dem Fahrzeug-Aufbau vom außenliegenden Spurstangen-Gelenkpunkt weg bewegen kann. Erstrebenswert wäre eine möglichst geringe Einwirkung der Spurstange bzw. des besagten Spurstangen-Gelenkpunktes auf die Vorspurkurve, was sich dann einstellt, wenn sich der außenliegende Spurstangen-Gelenkpunkt im fahrzeugaufbauseitigen Längslenker-Lager befände, was aber wie eingangs erläutert aus mehreren Gründen nicht empfehlenswert ist. Eine Anordnung der Spurstange mitsamt dem genannten Aktuator näher bei der Radachse, was auch im Hinblick auf kurze Aktuator-Stellwege vorteilhaft ist, verursacht hingegen Abweichungen von der Vorspurkurve einer ähnlichen nicht lenkbaren Einzelradaufhängung. Diese Abweichungen können jedoch bei der konstruktiven Ausrichtung der Momentanachse geeignet berücksichtigt werden, so dass die resultierende Vorspurkurve wieder der ursprünglichen Auslegung, nämlich für eine ähnliche nicht lenkbare Einzelradaufhängung, entspricht.

Im folgenden wird die Erfindung anhand eines Ausführungsbeispiels weiter erläutert, wobei die beigefügte **Figur 1** eine räumliche Ansicht der im wesentlichen in Fahrtrichtung betrachtet linken Hälfte einer erfindungsgemäßen Hinterachse eines Personenkraftwagens mit erfindungsgemäßer Einzelradaufhängung zeigt, von der **Figur 2** eine Ansicht in Fahrtrichtung von hinten, **Figur 3** die Draufsicht in Richtung der Fahrbahn und **Figur 4** die Seitenansicht zeigen.

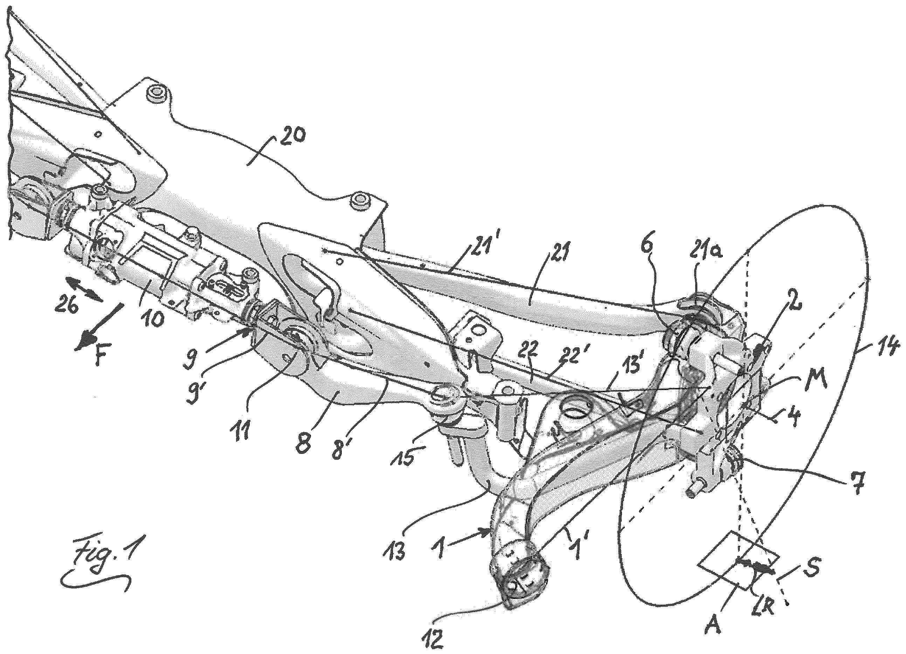

Zunächst auf **Figur 1** Bezug nehmend ist mit der Bezugsziffer 1 ein Längslenker bezeichnet, der zusammen mit einem gut sichtbaren oberen Querlenker 21 und einem im wesentlichen unterhalb diesem liegenden unteren Querlenker 22 das nur durch seinen Umfang in der Radmittenebene dargestellte Rad 14, das wie üblich an einer Radnabe befestigt ist, führt. Diese Radnabe ist wie üblich in einem Radträger 2 welcher vorliegend als Schwenklager 2 bezeichnet wird, über ein Radlager gelagert. Es kann die Radnabe bzw. das Rad von einer hier nicht gezeigten Antriebswelle angetrieben, d.h. in Rotation um die Rad-Drehachse 4 versetzt werden.

Der sich im wesentlichen in Fahrzeug-Längsrichtung bzw. Fahrtrichtung F, die als Pfeil in der Längs-Mittenebene des Fahrzeugs bzw. der Hinterachse dargestellt ist, erstreckende Längslenker 1 ist mit seinem vorderen Ende über ein Lager 12 derart gelenkig am nicht dargestellten Fahrzeug-Aufbau angelenkt, dass Einfeder- und Ausfeder-Bewegungen des Rades 14 in Vertikalrichtung ermöglicht werden. In seinem radseitigen Endbereich ist am Längslenker 1 eine nicht detailliert sichtbare Tragblechstruktur vorgesehen, die sich soweit in Vertikalrichtung erstreckt, dass an dieser Tragblechstruktur zwei Lager oder Gelenke 6, 7 oberhalb und unterhalb der Radmitte M befestigt sind, über die das Schwenklager 2 derart gelenkig mit dem Längslenker 1 verbunden ist, dass diese Gelenke 6, 7 eine jedenfalls in Seitenansicht überwiegend senkrecht verlaufende Lenkdrehachse S bestimmen, um welche das Schwenklager 2 gegenüber dem Längslenker 1 verschwenkbar ist. Weiterhin sind über Laschen, die aus der genannten Tragblechstruktur herausgearbeitet sind, auch die radseitigen Gelenke 21 a, 22a der beiden Querlenker 21, 22 oberhalb bzw. unterhalb der Radmitte M befestigt. (Eine ähnliche, jedoch mit der vorliegenden Ausführungsform nicht übereinstimmende Konstruktion im Detail zeigt im übrigen die nicht veröffentlichte deutsche Patentanmeldung 102011007283.7).

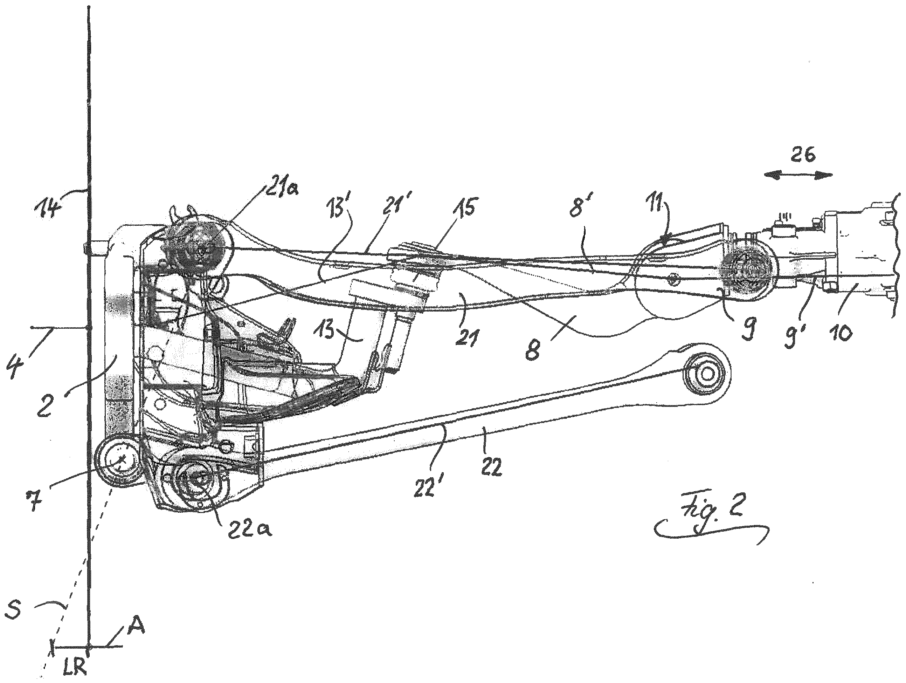

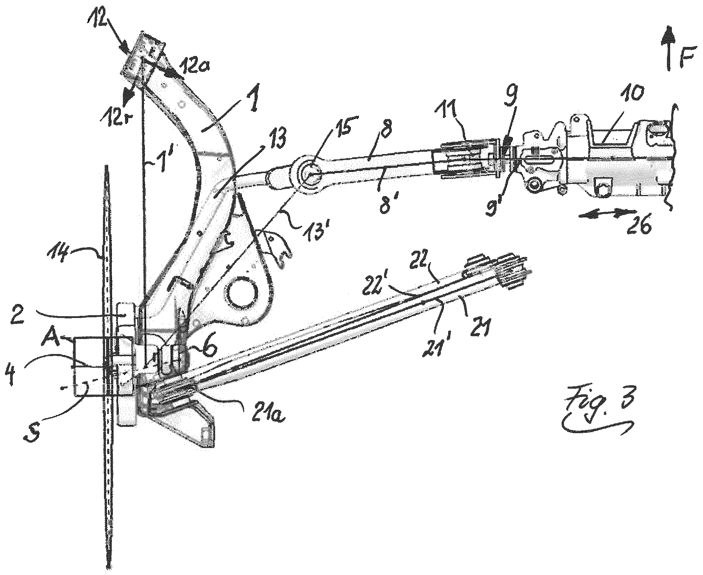

Die beiden soeben genannten Querlenker 21, 22 erstrecken sich zwar überwiegend in Fahrzeug-Querrichtung, dabei jedoch in Draufsicht mit einer gewissen Pfeilung nach vorne innen (vgl. hierzu **Fig.3**; Pfeilungswinkel = Winkel gegenüber der Fzg.-Querrichtung ca. 20°), und wie bei Zentrallenkerachsen üblich überdecken sich in Draufsicht die beiden Querlenker 21, 22 annähernd. Wie üblich liegen die beiden Querlenker 21, 22 bei Betrachtung in Fahrzeug-Längsrichtung (vgl. **Fig.2**) in unterschiedlichen Ebenen und dabei oberhalb (Querlenker 21) bzw. unterhalb (Querlenker 22) der Radmitte M, wobei sich die Querlenker 21, 22 nur soweit zur Fahrzeug-Mitte hin erstrecken, dass sie sich nicht schneiden. Mit ihrem dem Rad abgewandten in Fig.1 nicht sichtbaren Ende sind die Querlenker 21, 22 wie üblich in einem Achsträger 20 gelagert.

Selbstverständlich muss der durch die Lenkdrehachse S gegenüber einer herkömmlichen Zentrallenkerachse geschaffene zusätzliche Freiheitsgrad dieser Radaufhängung gebunden werden, wofür eine Spurstange 8 vorgesehen ist, die vorliegend einerseits an einen starr am Schwenklager 2 befestigten und somit quasi einen Bestandteil desselben bildenden Spurhebel 13 und anderenends an einem Stellelement 9 eines Lenk-Aktuators 10, auch nur Aktuator 10 genannt, angelenkt ist, mit dem das Rad durch geeignete Ansteuerung gelenkt, d.h. ein gewünschter Spurwinkel des Rades eingestellt werden kann. Hierfür wird das Stellelement 9 in Fahrzeug-Querrichtung gemäß Pfeil 26 verlagert. Dabei ist der Aktuator 10 im wesentlichen zentral zwischen den beiden Hinter-Rädern des Fahrzeugs angeordnet bzw. am Achsträger 20 befestigt und umhüllt über einen weiten Bereich das für beide Räder des Fahrzeugs bzw. dessen Hinterachse wirksame und beispielsweise in Form einer Zahnstange ausgebildete Stellelement 9, von dem hier lediglich die endseitige Aufnahme für die Spurstange 8 sichtbar ist. In der zumindest geringfügig gelenkigen Verbindung zwischen dem Stellelement 9 und der Spurstange 8 ist ein weiches Gummilager 11 (Steifigkeit kleiner 5000 N/mm) vorgesehen.

Um den Bauraumbedarf möglichst gering zu halten, verläuft der besagte Spurhebel 13 abschnittsweise innerhalb des entsprechend hohl ausgeführten Längslenkers 1, wofür selbstverständlich geeignete Durchtrittsöffnungen in den beiden Seitenwänden des Längslenkers 1 vorgesehen sind, durch welche der Spurhebel 13 unter Darstellung eines ausreichenden Freiraums für dessen Relativbewegung gegenüber dem Längslenker 1 in dessen Hohlraum eintreten bzw. aus dessen Hohlraum austreten kann. Um dies sichtbar zu machen ist der Längslenker 1 in den Figuren quasi durchsichtig dargestellt.

Nicht nur in **Figur 1****,** sondern auch in den weiteren Figuren sind neben den realen radführenden Bauteilen auch noch deren sog. Wirklinien dargestellt und mit der enstprechenden mit einem Hochstrich versehenen Bezugsziffer gekennzeichnet. Für die kinematische Betrachtung lässt sich so beispielsweise der Spurhebel 13 durch die Spurhebel-Wirklinie 13' darstellen. Ferner ist in **Fig. 1** **und** **3** die Rad-Aufstandsfläche A durch ein Quadrat dargestellt.

In **Figur 2** ist deutlich erkennbar, dass die Lenkdrehachse S durch geeignete Anordnung der beiden Gelenke 6, 7, von denen hier nur das untere Gelenk 7 sichtbar ist, solchermaßen verläuft, dass sich ein negativer Lenkrollradius LR ergibt, vorliegend wie üblich auf der Radaufstandsfläche A bzw. Fahrbahn gemessen in der Größenordnung von 35 mm. Der positive Spreizungswinkel der Lenkdrehachse S beträgt dabei ca. 20°. Ferner erkennt man in dieser Ansicht, dass die Spurstange 8, genauer deren Wirklinie 8' vom Gummilager 11 bzw. Gelenkpunkt mit dem Stellelement 9 ausgehend nach außen zum Spurhebel 13 hin geringfügig ansteigt. In dieser **Figur 2** ist der obere Querlenker 21 durchsichtig dargestellt, um die in Fahrtrichtung F weiter vorne liegende Verbindung zwischen dem Spurhebel 13 und der Spurstange 8 über ein Kugelzapfengelenk 15 sichtbar zu machen.

In **Figur 3** erkennt man insbesondere, dass die Spurstange 8 und deren Wirklinie 8' mit einer der Pfeilung der Querlenker 21, 22 gleichgerichteten Pfeilung, jedoch mit deutlich geringerem Pfeilungswinkel, verläuft. Ferner sind in dieser Figur 3 die unterschiedlichen Steifigkeiten des fahrzeugaufbauseitigen Längslenker-Lagers 12 durch Pfeile dargestellt, nämlich die Steifigkeit 12a in Axialrichtung des Lagers 12, die sich mit einem größeren Anteil in Fahrzeug-Querrichtung erstreckt, und die Steifigkeit 12r, die sich mit einem größeren Anteil in Fahrzeug-Längsrichtung erstreckt. (Diese Längsrichtung ist gleichgerichtet der Fahrtrichtung F). In einer konkreten Ausführungsform beträgt die radiale Steifigkeit (12r) circa das 1,5-fache der axialen Steifigkeit (12a). Im übrigen zeigt sich in dieser **Figur 3** der Radumfang in der Mittenebene (= Rad 14) wegen des Rad-Sturzes als Ellipse

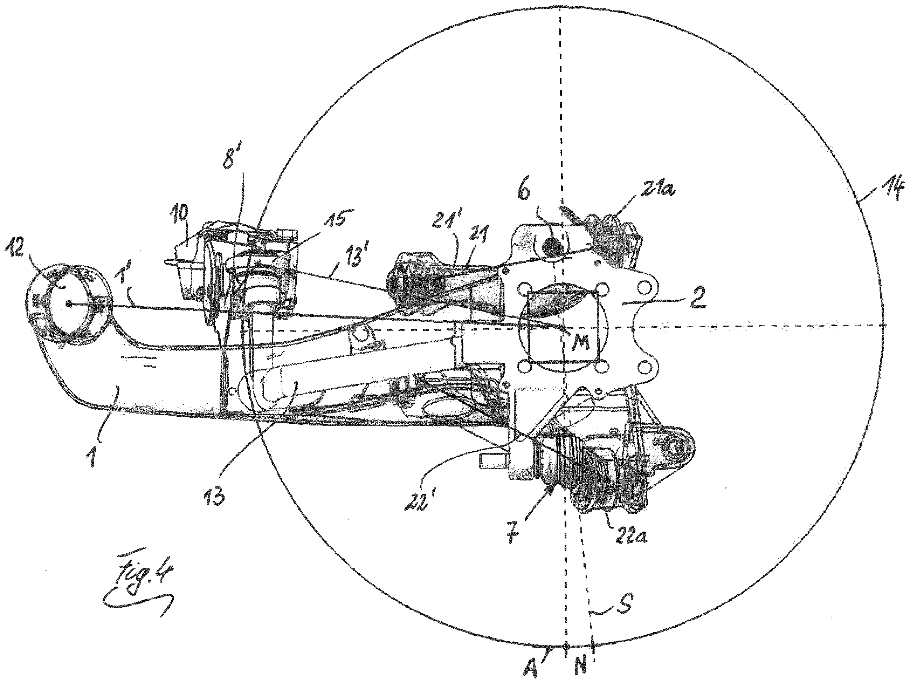

Aus **Figur 4** geht noch die sich durch geeignete Positionierung der die Lenkdrehachse S bestimmenden Gelenke 6, 7 ergebende betragsmäßig geringe Nachlaufstrecke N hervor. Tatsächlich liegt hier Vorlauf vor, was aber für die Stabilisierung des Fahrverhaltens unter Seitenkrafteinfluss gewünscht ist, nämlich dass das Rad in Vorspur geht.

Mit einer erfindungsgemäßen Einzelradaufhängung lässt sich unter Verwendung eines einzigen Lenk-Aktuators 10 eine Lenkbewegung der Räder an einer Zentrallenkerachse darstellen, ohne die Grundfunktion einer solchen üblicherweise nicht lenkbare Räder tragenden Zentrallenkerachse einzuschränken und ohne unverhältnismäßig viel Bauraum für die Lenk-Aktuatorik zu beanspruchen. Wegen der identischen Anbindungen an den Fahrzeug-Aufbau ist vorteilhafterweise eine einfache Austauschbarkeit mit der ungelenkten Achse gegeben; die Möglichkeit einer angetriebenen, lenkbaren Achse besteht ebenfalls.

## Patentansprüche

1. Einzelradaufhängung eines mittels eines Aktuators (10) zumindest geringfügig lenkbaren Hinterrads eines zweispurigen Fahrzeugs, dessen das Rad tragendes Schwenklager (2) durch einen sich im wesentlichen in Fahrzeug-Längsrichtung erstreckenden Längslenker (1) sowie zwei sich mit Pfeilung nach vorne innen überwiegend in Fahrzeug-Querrichtung erstreckende und bei Betrachtung in Fahrzeug-Längsrichtung in verschiedenen Ebenen liegende Querlenker (21, 22) geführt ist, deren dem Schwenklager (2) abgewandte Enden zumindest geringfügig gelenkig direkt oder indirekt mit dem Fahrzeug-Aufbau verbunden sind,
**dadurch gekennzeichnet, dass** das Schwenklager (2) über zwei bei Betrachtung in Fahrzeug-Längsrichtung in unterschiedlicher Höhe liegende Lager oder Gelenke (6, 7) derart gelenkig mit dem Längslenker (1) verbunden ist, dass diese Lager oder Gelenke (6, 7) eine in Seitenansicht überwiegend senkrecht verlaufende Lenkdrehachse (S) mit negativem Lenkrollradius für das Rad beschreiben,
und dass jeder Querlenker (21, 22) über ein Gummilager oder ein zumindest einen geringen Drehfreiheitsgrad aufweisendes Gelenk (21a, 22a) am Längslenker (1) befestigt ist,
und wobei das Schwenklager (2) unter Abstützung an einem weichen Gummilager (11) weiterhin durch eine Spurstange (8) geführt ist, die mit einem im wesentlichen in Fahrzeug-Querrichtung verlagerbaren Stellelement (9) des im wesentlichen zentral angeordneten und für beide Hinterräder des Fahrzeugs wirksamen Aktuators (10) verbunden ist.

2. Fahrzeug-Einzelradaufhängung nach Anspruch 1, **dadurch gekennzeichnet, dass** die Spurstange (8) mit geringer Pfeilung nach vorne innen verläuft.

3. Fahrzeug-Einzelradaufhängung nach Anspruch 1 oder 2, **dadurch gekennzeichnet, dass** am Schwenklager (2) ein Spurhebel (13) zur Anlenkung der Spurstange (8) solchermaßen ausgebildet ist, dass die Spurstange (8) vom Stellelement (9) des Aktuators (10) zum Spurhebel (13) zumindest geringfügig ansteigt.

4. Fahrzeug-Einzelradaufhängung nach einem der Ansprüche 1 - 3, wobei das fahrzeugaufbauseitige Längslenker-Lager (12) in einer ersten sich mit einem größeren Anteil in Fzg.-Längsrichtung erstrecken Richtung (12r) eine höhere Steifigkeit als in der hierzu senkrechten sich mit einem größeren Anteil in Fahrzeug-Querrichtung erstreckenden Richtung (12a) besitzt, **dadurch gekennzeichnet, dass** die Steifigkeit in der ersten Richtung (12r) nicht mehr als dreifach so groß wie die Steifigkeit in der zweiten sich mit einem größeren Anteil in Fzg.-Querrichtung erstreckenden Richtung (12a) ist.

5. Fahrzeug-Einzelradaufhängung nach einem der vorangegangenen Ansprüche, wobei die die Lenkdrehachse (S) bestimmenden Gelenke (6, 7) solchermaßen angeordnet sind, dass sich eine betragsmäßig kleine Nachlaufstrecke ergibt.

6. Fahrzeug-Einzelradaufhängung nach einem der Ansprüche 3 - 5, wobei Spurhebel (13) abschnittsweise innerhalb des entsprechend hohl ausgeführten Längslenkers (1) verläuft.

## Claims

1. An independent wheel suspension of a rear wheel of a two-track vehicle, which wheel can be steered at least slightly by means of an actuator (10), the swivel bearing (2) of said vehicle carrying the wheel being guided by a longitudinal control arm (1), which extends substantially in the longitudinal direction of the vehicle, and two transverse control arms (21, 22), which extend with a forward and inward sweep predominantly in the transverse direction of the vehicle, are disposed in different planes when viewed in the longitudinal direction of the vehicle, and of which the ends facing away from the swivel bearing (2) are connected directly or indirectly to the vehicle body in an at least slightly articulated manner,
**characterised in that** the swivel bearing (2) is connected to the longitudinal control arm (1) in an articulated manner by means of two bearings or joints (6, 7) disposed at different heights when viewed in the longitudinal direction of the vehicle, in such a way that these bearings or joints (6, 7) describe a steering axis of rotation (S) running predominantly perpendicularly in side view and having a negative scrub radius for the wheel,
and **in that** each transverse control arm (21, 22) is secured to the longitudinal control arm (1) by means of a rubber bearing or a joint (21 a, 22a) having at least a small rotational degree of freedom,
and wherein the swivel bearing (2) is supported on a soft rubber bearing (11) and is furthermore guided by a tie rod, which is connected to an actuator element (9) of the substantially centrally arranged actuator (10) that is effective for both rear wheels of the vehicle, said actuator element being displaceable substantially in the transverse direction of the vehicle.

2. A vehicle independent wheel suspension according to claim 1, **characterised in that** the tie rod (8) runs with a small forward and inward sweep.

3. A vehicle independent wheel suspension according to claim 1 or claim 2, **characterised in that** a steering arm (13) for linking the tie rod (8) to the swivel bearing (2) is formed on said swivel bearing such that the tie rod (8) rises at least slightly from the actuator element (9) of the actuator (10) to the steering arm (13).

4. A vehicle independent wheel suspension according to any one of claims 1 to 3, wherein the longitudinal control arm bearing (12) on the vehicle body has a greater stiffness in a first direction (12r) extending to a larger degree in the longitudinal direction of the vehicle than in the direction (12a), perpendicular thereto, extending to a larger degree in the transverse direction of the vehicle, **characterised in that** the stiffness in the first direction (12r) is no more than three times the stiffness in the second direction (12a) extending to a larger degree in the transverse direction of the vehicle.

5. A vehicle independent wheel suspension according to any one of the preceding claims, wherein the joints (6, 7) defining the steering axis of rotation (S) are arranged such that a small caster offset results.

6. A vehicle independent wheel suspension according to any one of claims 3 to 5, wherein the steering arm (13) runs in part within the longitudinal control arm (1), which is hollow accordingly.

## Revendications

1. Suspension de roue individuelle d'une roue arrière au moins faiblement directrice au moyen d'un actionneur (10) d'un véhicule à deux voies dont le palier de pivotement (2) portant la roue est guidé par un bras oscillant longitudinal (1) s'étendant essentiellement dans la direction longitudinale du véhicule ainsi que par deux bras oscillants transversaux (21, 22) s'étendant essentiellement en V vers l'avant et vers l'intérieur dans la direction transversale du véhicule situés dans des plans différents lorsqu'observés dans la direction longitudinale du véhicule, et dont les extrémités situées à l'opposé du palier de pivotement (2) sont reliées en étant au moins faiblement articulées directement ou indirectement à la carrosserie du véhicule,
**caractérisée en ce que**
le palier de pivotement (2) est articulé sur le bras oscillant longitudinal (1) par l'intermédiaire de deux paliers ou articulations (6, 7) situé(e)s à différentes hauteurs lorsqu'observé(e)s dans la direction longitudinale du véhicule de sorte que ces paliers ou articulations (6, 7) décrivent un axe de direction (S) ayant un rayon de roulement de direction négatif pour la roue, s'étendant essentiellement verticalement,
et chaque bras oscillant transversal (21, 22) est fixé au bras oscillant longitudinal (1) par l'intermédiaire d'un palier en caoutchouc ou d'une articulation (21a, 22a) présentant au moins une faible liberté de rotation, et
le palier de pivotement (2) est en outre guidé en s'appuyant sur un palier en caoutchouc souple (11) par une barre d'accouplement (8) qui est reliée à un élément de réglage (9) pouvant être déplacé essentiellement dans la direction transversale du véhicule, de l'actionneur (10) monté dans une position essentiellement centrale et actif pour les deux roues arrière du véhicule.

2. Suspension de roue individuelle de véhicule conforme à la revendication 1,
**caractérisée en ce que**
la barre d'accouplement (8) s'étend faiblement en V vers l'avant et vers l'intérieur.

3. Suspension de roue individuelle de véhicule conforme à la revendication 1 ou 2,
**caractérisée en ce que**
sur le palier de pivotement (2) est formé un levier d'accouplement (13) permettant d'articuler la barre d'accouplement (8) de sorte que cette barre d'accouplement (8) monte au moins faiblement entre l'élément de réglage (9) de l'actionneur (10) et le levier d'accouplement (13).

4. Suspension de roue individuelle de véhicule conforme à l'une des revendications 1 à 3, dans laquelle le palier (12) du bras oscillant longitudinal situé du côté de la carrosserie du véhicule a, une plus grande rigidité dans une première direction (12r) s'étendant pour une grande partie dans la direction longitudinale du véhicule, que dans la direction perpendiculaire (12a) s'étendant pour une grande partie dans la direction transversale du véhicule,
**caractérisée en ce que**
la rigidité dans la première direction (12r) n'est pas plus de trois fois supérieure à la rigidité dans la seconde direction (12a) s'étendant pour une grande partie dans la direction transversale du véhicule.

5. Suspension de roue individuelle de véhicule conforme à l'une des revendications précédentes,
**caractérisée en ce que**
les articulations (6, 7) définissant l'axe de direction (S) sont montées de façon à obtenir une distance de marche à vide relativement faible.

6. Suspension de roue individuelle de véhicule conforme à l'une des revendications 3 à 5, dans lequel le levier d'accouplement (13) s'étend par segments à la partie interne du bras oscillant longitudinal (1) réalisé creux à cet effet.
